Europäisches Patentamt

European Patent Office

Office européen des brevets

(11) Numéro de publication: **0 440 516 B1**

(12) **FASCICULE DE BREVET EUROPEEN**

(45) Date de publication du fascicule du brevet: **30.08.95**
(51) Int. Cl.6: **C01F 17/00**, C01G 1/12

(21) Numéro de dépôt: **91400109.4**

(22) Date de dépôt: **18.01.91**

(54) **Procédé d'élaboration de composés binaires du soufre.**

(30) Priorité: **30.01.90 FR 9001071**

(43) Date de publication de la demande:
**07.08.91 Bulletin 91/32**

(45) Mention de la délivrance du brevet:
**30.08.95 Bulletin 95/35**

(84) Etats contractants désignés:
**AT BE CH DE DK ES FR GB GR IT LI LU NL SE**

(56) Documents cités:
**FR-A- 2 333 753**
**US-A- 3 748 095**

**SOVIET INVENTIONS ILLUSTRATED, Section CH, week 44, 14 Dec. 1983. Derwent Publications Ltd., London GB., no 83-806660/44 & SU-A-986857 (MOSCOW FINE CHEM TECHN)**

**Gmelin: "Handbook of Inorganic Chemistry" 1983, Springer Verlag, Berlin,8'th Ed.,Part C7, System no. 39,**

**CHEMICAL ABSTRACTS, vol. 91, no. 14, octobre 1979 Columbus, Ohio, USA T. Matsuoka et al.: "Metal sulfide with high melting point." page 101; ref. no. 109611 E**

**JOURNAL OF PHYSICS E. SCIENTIFIC INSTRUMENTS. vol. 3, no. 4, avril 1970, ISHING, BRISTOL GB page 317 S. Marich: "The preparation of high purity, metal-sulphur alloys."**

(73) Titulaire: **RHONE-POULENC CHIMIE**
**25, Ouai Paul Doumer**
**F-92408 Courbevoie Cédex (FR)**

(72) Inventeur: **Colombet, Pierre**
**6 rue des Hauts Pavés**
**F-44000 Nantes (FR)**
Inventeur: **Molinie, Philippe**
**38 rue Eugène Sue**
**F-44800 Saint Herblain (FR)**
Inventeur: **Spiesser, Michel**
**12 avenue de l'Eperonnière**
**F-44000 Nantes (FR)**

(74) Mandataire: **Esson, Jean-Pierre et al**
**RHONE-POULENC CHIMIE,**
**Direction de la Propriété Industrielle,**
**25, quai Paul Doumer**
**F-92408 Courbevoie Cédex (FR)**

EP 0 440 516 B1

**Description**

La présente invention concerne un procédé d'élaboration de composés binaires du soufre, le cation étant choisi parmi les métaux de Transition et les métaux des terres rares.

Elle concerne notamment un procédé d'élaboration de composés soufrés de terres rares ou de métaux de Transition et, plus particulièrement, un procédé d'élaboration des sulfures de terres rares ou de sulfures de métaux de Transition.

Les sulfures supérieurs de terres rares peuvent être utilisés comme catalyseurs d'hydro-traitement dans l'industrie du raffinage des pétroles. Les sesquisulfures de terres rares peuvent être utilisés comme pigments colorés dans les plastiques, les céramiques, les matières céramiques, les produits verriers par exemple. Ils trouvent également une application dans les matériaux constituant les fenêtres optiques tant pour la lumière visible que pour l'infrarouge. Enfin, ils sont également utilisés comme détecteurs de présence de soufre.

Les sulfures de métaux de Transition sont utilisés dans l'industrie comme catalyseurs d'hydro-traitement, comme lubrifiants ou comme électrodes dans les batteries et piles (éventuellement, photovoltaïques). Ils trouvent également des applications dans l'industrie des composés luminescents.

La synthèse des sulfures de terres rares renfermant au moins un élément de la famille comprenant des lanthanides "ln", ayant un numéro atomique compris entre 57 et 71, et l'yttrium de numéro atomique 39, par action directe de ces éléments avec le soufre, est un procédé coûteux.

La synthèse actuelle de ces sulfures, telle qu'elle est notamment décrite dans les brevets U.S. 3748095 et FR 2100551, est réalisée par action de sulfure d'hydrogène ou de carbone sur un oxycarbonate amorphe ou un oxyde de terre rare à une température supérieure à 1000°C. Cette synthèse ne permet pas la mise en oeuvre de quantités importantes et est donc de ce fait difficilement exploitable à l'échelle industrielle.

La synthèse des sulfures des métaux de Transition contenant les éléments dont le numéro atomique est compris entre 21 et 30, 40 et 50 et 72 et 82, est réalisée par action de sulfure d'hydrogène sur un sel de métal de Transition, par exemple un chlorure, à des températures modérées ou par action directe des éléments.

Un des buts de la présente invention est de remédier à ces inconvénients en proposant un procédé de synthèse de composés soufrés de terres rares exploitable industriellement.

Un autre but de la présente invention est de proposer un nouveau procédé d'élaboration des sulfures de métaux de Transition.

A cet effet, l'invention concerne un procédé de synthèse de composés binaires du soufre, notamment de composés soufrés de terres rares et de sulfures de métaux de Transition, consistant à faire réagir soit un composé de terre rare, soit un oxyde de métal de Transition avec un composé carboné du soufre à l'état gazeux, caractérisé en ce que l'on conduit la réaction en enceinte fermée et en ce que l'on utilise un composé de terre rare ou un oxyde de métal de transition sous forme solide.

La réaction de sulfuration est dans ce cas une réaction de surface impliquant la pénétration du gaz sulfurant dans le solide précurseur. L'avancement de la réaction est fonction des migrations en sens inverse, par exemple, des anions $O^{2-}$ et $S^{2-}$. Cette explication n'est donnée qu'à titre indicatif, et ne limite en aucune façon la portée de l'invention. La quantité de composé carboné du soufre engagée est au moins égale à la quantité stoechiométrique nécessaire pour transformer le composé de terre(s) rare(s) en composé soufré de terre(s) rare(s) et est avantageusement supérieure de 20 à 150 % en masse à cette quantité stoechiométrique.

La température de la réaction n'est pas critique selon la présente invention, contrairement à un certain nombre de paramètres tels que le rapport stoechiométrique des composants dans la réaction, ou les pressions partielles de certains composants, qui eux sont significatifs. Cependant, comme pour toutes les réactions de ce type, plus la température est élevée, plus la cinétique est rapide. De même, à chaque valeur de la pression partielle de composé carboné du soufre, il correspond une température minimale au-dessus de laquelle la réaction de sulfuration s'effectue selon une cinétique appréciable. En-dessous de cette température, la sulfuration peut avoir lieu mais le temps de réaction nécessaire sera très long, rendant la réaction pratiquement impossible industriellement. Les produits obtenus sont à l'état cristallin, contrairement à l'état de la technique qui ne permet pratiquement que l'obtention de structures amorphes aux températures mises en jeu dans le présent procédé.

Selon une caractéristique préférée de l'invention, la température de réaction sera, de préférence, comprise entre 300°C et 800°C, avantageusement 350°C et 600°C. Pour de telles températures, les composés obtenus sont sous forme cristallisée.

Comme on l'a indiqué, la réaction de sulfuration est une réaction de surface qui s'entretient dans la masse des oxydes de départ grâce à la migration des ions $S^{2-}$ et des anions associés à la terre rare

2

comme $O^{2-}$ par exemple, en sens inverse. Dans une première étape, il convient de favoriser la pénétration du composé carboné du soufre à l'intérieur des produits de départ. La pénétration est avantageusement facilitée par une pression partielle élevée en composé carboné du soufre, par une granulométrie faible et des structures cristallogrophiques ouvertes des produits de départ. C'est pourquoi, à la température de réaction, la pression partielle initiale du composé carboné du soufre est par exemple comprise entre $10^5$ et $150 \times 10^5$ Pa, de préférence entre $10 \times 10^5$ et $150 \times 10^5$ Pa.

Selon une autre caractéristique de l'invention, la granulométrie des composés de terres rares et des oxydes de métaux de Transition est avantageusement comprise entre 0,003 et 1000 $\mu$m.

Selon une autre caractéristique de l'invention, la sulfuration peut être obtenue par traitement en plusieurs étapes du composé de terre rare par le composé carboné de soufre. De ce fait, le rendement global de transformation du composé en sulfure est amélioré. En conséquence, une nouvelle quantité de composé carboné du soufre, calculée en fonction du degré d'avancement de la réaction, sera ajoutée dans l'enceinte fermée après élimination de la phase gazeuse ($CS_2$ restant et oxyde de carbone). Le retraitement a pour effet d'instaurer une pression partielle importante en composé carboné du soufre.

Toutefois, la réaction sera d'autant plus facile que le rayon ionique de la terre rare sera élevée.

Le degré de pureté des matières premières engagées conditionnera le degré de pureté des produits obtenus. En outre, il peut être préférable notamment pour éliminer les composés gazeux adsorbés dans le sulfure obtenus et obtenir une pureté désirée, de traiter thermiquement à température modérée et de préférence sous vide dynamique les produits obtenus en vue de l'élimination notamment de l'oxyde de carbone et du composé carboné de soufre adsorbés.

Selon encore une autre caractéristique de l'invention, le composé de terre rare est à l'état solide et est choisi parmi les composés oxygénés de terre rare, comme par exemple parmi le groupe comprenant les oxydes, hydroxydes carbonates, oxalates, carboxylates. Ce composé oxygéné de terre rare peut être constitué d'un composé oxygéné mixte de terres rares. Le composé de terre rare peut également être un sel minéral de terre rare choisi dans le groupe comprenant les sulfate et nitrate.

Les composés de terres rares utilisés sont soit sous forme cristallisée soit sous forme amorphe.

Le tableau 1 ci-dessous regroupe à titre d'exemple un certain nombre de produits pouvant être utilisés comme produits de départ.

Ces exemples ne sont cités qu'à titre indicatif, l'invention ne se limitant pas à ces composés spécifiques.

3

## *TABLEAU 1*

### COMPOSES OXYGENES DE TERRE RARE UTILISES

| COMPOSE | SYMETRIE | GROUPE D'ESPACE | PARAMETRES CRISTALLINS |
|---|---|---|---|
| $CeO_2$ | Cubique | Fm3m | $a_0 = 5,4113\ (1)$ Å |
| $La_2O_3$ | Hexagonale | P321 | $a_0 = 3,9773$ Å $\quad c_0 = 6,1299$ Å |
| $La(OH)_3$ | Hexagonale | P6$_3$/m | $a_0 = 6,523$ Å $\quad c_0 = 3,3855$ Å |
| $La_2(CO_3)_3,\ H_2O$ | Orthorhombique | | $a_0 = 9$ Å $\quad b_0 = 9,58$ Å $\quad c_0 = 17,22$ Å |
| $Pr_6O_{11}$ | mélange : <br> - cubique $(PrO_2)$ <br> - cubique | Fm3m <br><br> Ia3 | $a_0 = 5,392$ Å <br><br> $a_0 = 10,99$ Å |
| $Nd_2O_3$ | Hexagonale | P321 | $a_0 = 3,831$ Å $\quad c_0 = 5,999$ Å |
| $Nd(OH)_3$ | Hexagonale | P6$_3$/m | $a_0 = 6,421$ Å $\quad c_0 = 3,74$ Å |
| $Sm_2O_3$ | mélange : <br> - cubique <br> - monoclinique | Ia3 <br> C$_2$/m <br> $\beta = 99\ 97°$ | $a_0 = 10,927$ Å <br> $a_0 = 14,18$ Å $\quad \beta = 99.97°$ <br> $b_0 = 3,633$ Å <br> $c_0 = 8,847$ Å |
| $Eu_2O_3$ | cubique | Ia3 | $a_0 = 10,868$ Å |
| $Gd_2O_3$ | cubique | Ia3 | $a_0 = 10,813$ Å |
| $Tb_4O_7$ | cubique | Fm3m | $a_0 = 5,29$ Å |
| $Dy_2O_3$ | cubique | Ia3 | $a_0 = 10,654$ Å |
| $Ho_2O_3$ | cubique | Ia3 | $a_0 = 10,608$ Å |
| $Er_2O_3$ | cubique | Ia3 | $a_0 = 10,547$ Å |
| $Tm_2O_3$ | cubique | Ia3 | $a_0 = 10,486$ Å |
| $Yb_2O_3$ | cubique | Ia3 | $a_0 = 10,436$ Å |
| $Lu_2O_3$ | cubique | Ia3 | $a_0 = 10,393$ Å |
| $Y_2O_3$ | cubique | Ia3 | $a_0 = 10,604$ Å |

Le tableau 2 ci-dessous regroupe à titre d'exemples un certain nombre de produits pouvant être utilisés comme produits de départ, pour obtenir des sulfures de métaux de transition.

Ces exemples ne sont cités qu'à titre indicatif, l'invention ne se limitant pas à ces composés spécifiques.

*T A B L E A U   2*

## OXYDES DE METAUX DE TRANSITION UTILISES

| COMPOSES | SYMETRIE | GROUPE D'ESPACE | PARAMETRES CRISTALLINS |
|----------|----------|-----------------|------------------------|
| $TiO_2$ | Tétragonale | $I4_1$ / amd | $a_0$ = 3,7252 Å   $c_0$ = 9,5139 Å |
| $CrO_3$ | Orthorhombique | $Ama^2$ | $a_0$ = 5,7494 Å<br>$b_0$ = 8,556  Å<br>$c_0$ = 4,7961 Å |
| $MoO_3$ | Orthorhombique | Pbnm | $a_0$ =  3,963  Å<br>$b_0$ = 13,856  Å<br>$c_0$ =  3,6966 Å |
| $Fe_2O_3$ | Hexagonale | R 3c | $a_0$ = 5,0356 Å $c_0$ = 13,7489 Å |
| $SnO_2$ | Tétragonale | p 4/ mnm | $a_0$ = 4,738 Å   $c_0$ = 3,188 Å |

Les composés carbonés du soufre pouvant être utilisés dans l'invention sont l'oxysulfure, le monosulfure et le disulfure de carbone, et les différents composés organiques du soufre.

Le disulfure de carbone, peu coûteux, stable à température ambiante, sera le composé préféré de l'invention principalement parce qu'il est sous forme liquide à température ambiante, ce qui facilite son introduction dans l'enceinte en grande quantité. Le composé carboné du soufre peut avantageusement contenir du sulfure d'hydrogène en quantité faible de l'ordre de 5 % en mole et/ou du soufre élémentaire.

Les composés soufrés de terres rares obtenus pour le procédé de l'invention sont des sulfures supérieurs de famille $Ln_2S_4$. Ces sulfures supérieurs peuvent être mélangés avec un sesquisulfure, avec une faible proportion de ce dernier. Toutefois, on obtient également des sulfures supérieurs de formule (I) $Ln_2S_4$-y, avec y compris entre 0 et 0,6 à l'exception de l'europium pour lequel on obtient un mélange de $Eu_3S_4$ et $Eu_2S_{3,8}$.

Le procédé permet également d'obtenir directement le sesquisulfure dans certaines conditions opératoires. Ainsi pour le lanthane, on obtient $La_2S_3$ pour une température supérieure à 600°C.

Ces composés soufrés peuvent également être un mélange de composés soufrés de formule (I) avec des oxysulfures de terre rare de formule $Ln_2O_2S$ et/ou $Ln_2O_2S_2$ en quantité plus ou moins importante.

Ces sulfures supérieurs peuvent être transformés en sesquisulfures par un traitement thermique, sous atmosphère inerte ou réductrice, de préférence à une température supérieure à 700°C.

Les sulfures de métaux de Transition obtenus par le présent procédé sont des composés de formule $MS_2$ ou $M_2S_3$. Certains de ces sulfures peuvent être transformés en des sulfures inférieurs par désulfuration.

Selon une autre caractéristique de l'invention, les produits de la réaction sont, de façon inattendue compte tenu des basses températures de travail, des produits cristallisés.

L'invention permet de synthétiser à basses températures des sulfures de terres rares et de métaux de Transition selon un procédé exploitable industriellement.

D'autres caractéristiques de l'invention seront encore mises en évidence au cours de la description faite en référence aux exemples et à la figure unique annexée, donnés bien entendu, uniquement à titre indicatif.

Il est à noter que pour les terres rares tous les rendements cités dans les exemples ci-dessous seront toujours calculés suivant la formule suivante :

$$R = 100 \cdot \left(1 - \frac{ax}{2b}\right).$$

Dans le cas où un oxyde $Ln_aO_b$ donne un produit avec un rapport atomique O/S égal à $x/y'$ pour deux molécules de terre rare, avec $y' = 4 - y$, dans le cas où l'oxygéne est absent ($x = 0$).

$y$ étant défini par la formule (I) $Ln_2S_{4-y}$, ci-dessus.

Pour le praséodyme, le cérium et le terbium, les oxydes de départ ont pour formule $CeO_2$, $Pr_6O_{11}$ et $Tb_4O_7$ respectivement. Pour les autres éléments, leur formulation est $Ln_2O_3$.

## *Exemple 1*

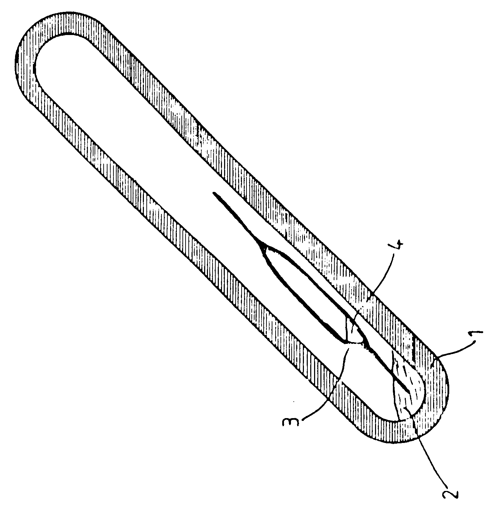

Se proposant par exemple de conduire l'obtention de composés soufrés de terres rares, conformément à la figure 1, on dispose l'oxyde de terre rare (2) présent sous forme solide dans un tube de pyrex (1) de 11mm de diamètre intérieur et de 2,5mm d'épaisseur. On introduit dans le tube (1) une ampoule (3) contenant du disulfure de carbone (4) présent sous forme liquide. Après avoir scellé le tube (1) à une longueur de 10 cm environ, on agite l'ensemble pour briser sur la paroi du tube (1) la pointe de l'ampoule (3) contenant le disulfure de carbone (4).

On place le tube réactionnel à l'intérieur d'un four horizontal et on le soumet au cycle thermique suivant : montée lente (environ une heure) jusqu'à 350-480°C, palier de quatre jours à la température choisie, puis refroidissement lent (environ 5 à 6 heures) jusqu'à l'ambiante.

A ces températures, le disulfure de carbone est sous forme gazeuse et, du fait des quantités utilisées (de 300 à 500mg), la pression initiale en disulfure de carbone est d'environ $25 \times 10^5$ Pa. Le tube est alors ouvert à la flamme et les gaz résiduels sont évacués par cryopompage.

Les retraitements consistant à ajouter dans l'enceinte fermée une nouvelle quantité d'agent de sulfuration après élimination de la phase gazeuse (disulfure de carbone restant et oxyde de carbone), sont effectués suivant la même procédure et avec des proportions en disulfure de carbone calculées en fonction du degré d'avancement de la réaction et en considérant le produit retraité comme étant l'oxyde de départ. Les exemples suivants sont tous relatifs à un seul traitement selon la procédure décrite précédemment.

## *Exemple 2*

On suit le mode opératoire décrit dans l'exemple 1 et on l'applique à l'oxyde de cérium de formule $CeO_2$ de couleur blanche et dont l'identification cristallographique est la suivante :

cubique Fm3m $a_0 = 5,411$ (1) Å

Le volume de l'enceinte réactionnelle est de 9,5 $cm^3$. La masse de $CeO_2$ est égale à 0,75g. La masse de $CS_2$ est égale à 0,33g (sans excès) ou à 0,44g (excès de 33 %). Les phases mises en évidence après sulfuration sont les suivantes :

$Ce_2S_4$ cubique $a_0 = 8,106(5)$ Å

$CeO_2$

Les résultats obtenus sont regroupés dans le tableau 3 ci-dessous :

## TABLEAU 3

| Etude en fonction de : TEMPERATURE | | Etude en fonction de : TEMPS | | Etude en fonction de : EXCES MASSIQUE DE $CS_2$ | |
|---|---|---|---|---|---|
| Durée : 72 heures Sans excès de $CS_2$ Sans broyage initial | | T = 500°C Sans excès de $CS_2$ Sans broyage initial | | T = 500°C Durée 48 heures Sans broyage initial | |
| T | Rendement (%) | T | Rendement (%) | Excès % | Rendement % |
| 350°C | 19 | 2 h | 60 | 0 | 80 |
| 426°C | 64 | 14 h | 69 | 33 | 95 |
| 488°C | 78 | 48 h | 80 | | |
| | | 168 h | 84 | | |
| | | 332 h | 87 | | |

### Exemple 3

On suit le mode opératoire de l'exemple 1 et on l'applique à l'hydroxyde de lanthane de formule $La(OH)_3$, de couleur blanche et dont l'identification cristallographique est la suivante :

hexagonal $P6_3/m$ $a_0$ = 6,523 Å $C_0$ = 3,855 Å

Le volume de l'enceinte réactionnelle est de $9,5 cm^3$. La masse de $La(OH)_3$ est égale à 0,58g. La masse de $CS_2$ est égale à 0,27g (excès de 17 %) ou à 0,36g (excès de 55 %). Les phases mises en évidence après sulfuration sont les suivantes :

| La$_2$S$_4$ monoclinique | a = 8,179 (2) | b = 8,187 (1) |
|---|---|---|
| | c = 4,122 (1) | $\beta$ = 90° |
| La$_2$O$_2$S$_2$ hexagonal La$_2$S$_3$ La$_2$O$_3$ | a$_0$ = 4,051 (1) Å | C$_0$ = 6,944 (2) Å |

Les résultats obtenus sont regroupés dans le tableau 4 ci-dessous :

TABLEAU 4

| Etude en fonction de : **TEMPERATURE** | | Etude en fonction de : **TEMPS** | | Etude en fonction de : **EXCES MASSIQUE DE CS$_2$** | |
|---|---|---|---|---|---|
| Durée : 72 heures | | T = 500°C | | T = 500°C | |
| Excès de CS$_2$ : 17 % | | Excès de CS$_2$ : 17 % | | Durée : 48 heures | |
| Sans broyage initial | | Sans broyage initial | | Sans broyage initial | |
| T | Rendement | T | Rendement | Excés (%) | Rendement |
| 350°C | 66 | 2 h | 74 | 17 | 83 |
| 488°C | 79 | 14 h | 82 | 55 | 88 |
| | | 48 h | 83 | 75 | 89 |
| | | | | 133 | 95 |

## Exemple 4

On suit le mode opératoire de l'exemple 1, mais en utilisant un sulfate de cérium Ce$_2$(SO$_4$)$_3$, nH$_2$o. La masse initiale de sulfate est de 0,535g celle de CS$_2$ de 0,172g. Le volume de l'enceinte est de 9,5 cm$^3$.

La quantité de CS$_2$ introduite correspond à un excès de 20 % par rapport à la stoechiométrie.

Le produit obtenu est un sulfure de cérium de formule Ce$_2$S$_4$. Le rendement est de 99 %.

## Exemple 5

On suit le mode opératoire de l'exemple 1 et on l'applique à l'oxyde de titane de formule TiO$_2$, de couleur blanche et dont l'identification cristallographique est la suivante :

Tétragonal I4$_1$/amd a$_0$ = 3,785 Å C$_0$ = 9,514 Å

Le volume de l'enceinte réactionnelle est de 9,5 cm$^3$. La masse de TiO$_2$ est égale à 0,22 g. La masse de CS$_2$ est égale à 0,32g (excès de 50 %). Les phases mises en évidence après sulfuration sont les suivantes :

TiS$_2$ : hexagonal P $\overline{3m1}$ a$_0$ = 3,412 Å C$_0$ = 5,695 Å

Le rendement est calculé d'après les masses initiales et finales et est égal à :

$$R\ (\%) = 100\ (m_g - m_i)\ /\ 0,402\ m_i = 78\ \%$$

## Exemple 6

On suit le mode opératoire décrit dans l'exemple 1 et on l'applique sur des poudres d'oxyde de Cérium de granulométrie variable. La température est de 500°C et la pression initiale en disulfure de carbone est la même dans chaque cas. Les résultats regroupés dans le tableau 5 ci-dessous démontrent l'intérêt d'une granulométrie faible des produits de départ.

### TABLEAU 5

#### CeO$_2$

| GRANULOMETRIE ($\mu$m) | mCS$_2$ (g) | m$_i$/m$_f$ (g/g) | R (%) |
|---|---|---|---|
| 0,1 - 100 | 0,430 | 0,973/1,147 | 97 |
| 100 - 200 | 0,419 | 0,946/1,112 | 95 |
| 200 - 250 | 0,433 | 0,978/1,111 | 76 |
| non broyé (100 - 1000) | 0,407 | 0,920/1,048 | 78 |

**_Exemple 7_** : Influence du rayon ionique

On suit le mode opératoire décrit dans l'exemple 1 et on l'applique sur des terres rares de rayon ionique variable afin de démontrer que les terres rares légères à gros rayon ionique sont plus facilement sulfurées que les terres rares lourdes à faible rayon ionique. Les résultats sont rassemblés dans le tableau 6 ci-dessous :

## T A B L E A U   6

| | RENDEMENT R (%) = $100\left(1 - \dfrac{ax}{2b}\right)$ | | | | | | | |
|---|---|---|---|---|---|---|---|---|
| Terre rare | La | Ce | Pr | Nd | Sm | Gd | Y | Tb |
| Rayon ionique Å | 1,061 | 1,034 | 1,013 | 0,995 | 0,964 | 0,938 | 0,930 | 0,923 |
| T (°C) 350°C | 66 | 19 | 4 | 32 | | 14 | | 20 |
| 426°C | | 64 | 70 | 52 | 46 | 36 | 5 | |
| 488°C | 79 | 78 | | | 59 | | 17 | 36 |

### Exemple 8

On introduit 10g de La(OH)$_3$ décrit à l'exemple 1 dans un autoclave de volume intérieur 25cm$^3$, avec 5g de CS$_2$ (20 % excés).

L'autoclave est chauffé à 500° C pendant 48 heures. La pression dans l'autoclave est de l'ordre de 150 x 10$^5$ Pa.

Après refroidissement de l'autoclave et évaporation du CS$_2$ en excés et des oxydes de carbone formés, le sulfure de lanthane La$_2$S$_4$ est récupéré avec un rendement de 99 %.

### Exemple 9

L'exemple 8 est répété mais en remplaçant l'hydroxyde de lanthane par 1,602 g de nitrate de lanthane et en ajoutant 0,34 g de CS$_2$ (20 % excés). Le rendement en La$_2$S$_4$ obtenu est de 99%.

## Revendications

1.  Procédé de synthèse de composés binaires du soufre, notamment de composés soufrés de terres rares et de métaux de transition, consistant à faire réagir soit un composé de terre rare, soit un oxyde de métal de transition, avec un composé carboné du soufre à l'état gazeux, caractérisé en ce que l'on conduit la réaction en enceinte fermée et en ce qu'on utilise un composé de terre rare ou un oxyde de métal de transition sous forme solide.

2.  Procédé selon la revendication 1, caractérisé en ce que la quantité en composé carboné du soufre est au moins égale à la quantité stoechiométrique pour former le composé soufré de terre(s) rare(s) désiré ou le composé soufré de métal de transition.

3. Procédé selon la revendication 2, caractérisé en ce que la quantité précitée de composé carboné du soufre est supérieure de 20 à 150 % à la quantité stoechiométrique précitée.

4. Procédé selon l'une des revendications 1 à 3, caractérisé en ce que la température de la réaction est comprise entre 350 et 600°C.

5. Procédé selon l'une des revendications 1 à 4, caractérisé en ce que, à la température de réaction, la pression partielle initiale du composé carboné du soufre est comprise entre $1.10^5$ et $150.10^5$ Pa, avantageusement entre $10.10^5$ et $150.10^5$ Pa, si la pression initiale totale de l'enceinte est de $10^5$ Pa.

6. Procédé selon l'une des revendications 1 à 5, caractérisé en ce que la granulométrie des composés de terres rares ou des oxydes de métaux de transition est comprise entre 0,1 et 1000 $\mu$m, avantageusement entre 0,1 et 200 $\mu$m.

7. Procédé selon l'une des revendications 1 à 6, caractérisé en ce qu'on ajoute dans l'enceinte fermée le composé carboné du soufre après élimination des phases gazeuses restantes.

8. Procédé selon l'une des revendications 1 à 7, caractérisé en ce que le carbone graphite susceptible de se former au cours de la synthèse est éliminé par sulfuration, soit en dissolvant au départ la quantité de soufre nécessaire dans le sulfure de carbone, soit en utilisant le soufre libéré lors de la phase finale au cours de la transformation du sulfure supérieur en sesquisulfure.

9. Procédé selon l'une des revendications 1 à 8, caractérisé en ce que le composé de terres rares est un composé oxygéné de terres rares ou un sel minéral de terres rares.

10. Procédé selon la revendication 9, caractérisé en ce que le composé oxygéné de terres rares est choisi dans le groupe comprenant les oxydes, les carbonates ou les hydroxydes.

11. Procédé selon la revendication 9, caractérisé en ce que le sel minéral de terre rare est choisi dans le groupe comprenant les sulfates et les nitrates.

12. Procédé selon l'une des revendications 1 à 11, caractérisé en ce que le composé carboné du soufre est choisi dans le groupe comprenant le disulfure de carbone, le monosulfure de carbone et l'oxysulfure de carbone.

13. Procédé selon la revendication 12, caractérisé en ce que le composé carboné du soufre contient du sulfure d'hydrogène et/ou du soufre élémentaire.

**Claims**

1. Process for the synthesis of binary sulphur compounds, especially of sulphur compounds of rare earths and of transition metals, consisting in reacting either a rare-earth compound or a transition metal oxide with a carbon compound of sulphur in the gaseous state, characterized in that the reaction is conducted in a closed vessel and in that a rare-earth compound or a transition metal oxide is employed in solid form.

2. Process according to Claim 1, characterized in that the quantity of carbon compound of sulphur is at least equal to the stoichiometric quantity for forming the desired rare-earth(s) sulphur compound or the transition metal sulphur compound.

3. Process according to Claim 2, characterized in that the abovementioned quantity of carbon compound of sulphur is from 20 to 150 % greater than the above-mentioned stoichiometric quantity.

4. Process according to one of Claims 1 to 3, characterized in that the reaction temperature is between 350 and 600°C.

5. Process according to one of Claims 1 to 4, characterized in that, at the reaction temperature, the initial partial pressure of the carbon compound of sulphur is between $1 \times 10^5$ and $150 \times 10^5$ Pa, advanta-

geously between $10 \times 10^5$ and $150 \times 10^5$ Pa, if the total initial vessel pressure is $10^5$ Pa.

6. Process according to one of Claims 1 to 5, characterized in that the particle size of the rare-earth compounds or of the transition metal oxides is between 0.1 and 1000 $\mu$m, advantageously between 0.1 and 200 $\mu$m.

7. Process according to one of Claims 1 to 6, characterized in that the carbon compound of sulphur is added to the closed vessel after removal of the remaining gaseous phases.

8. Process according to one of Claims 1 to 7, characterized in that the graphite carbon liable to be formed during the synthesis is removed by sulphurization, either by dissolving at the start the necessary quantity of sulphur in carbon sulphide, or by employing the sulphur released during the final stage in the course of the conversion of the higher sulphide to sesquisulphide.

9. Process according to one of Claims 1 to 8, characterized in that the rare-earth compound is a rare-earth oxygen compound or a rare-earth inorganic salt.

10. Process according to Claim 9, characterized in that the rare-earth oxygen compound is chosen from the group including oxides, carbonates or hydroxides.

11. Process according to Claim 9, characterized in that the rare-earth inorganic salt is chosen from the group including sulphates and nitrates.

12. Process according to one of Claims 1 to 11, characterized in that the carbon compound of sulphur is chosen from the group including carbon disulphide, carbon monosulphide and carbon oxysulphide.

13. Process according to Claim 12, characterized in that the carbon compound of sulphur contains hydrogen sulphide and/or elemental sulphur.

**Patentansprüche**

1. Verfahren zur Herstellung binärer Schwefelverbindungen, insbesondere schwefelhaltiger Seltenerd- und Übergangsmetallverbindungen, bei dem man, entweder eine Seltenerdverbindung oder ein Übergangsmetalloxid mit einer gasförmigen kohlenstoffhaltigen Schwefelverbindung reagieren läßt, dadurch gekennzeichnet, daß die Reaktion in einem geschlossenen Behältnis durchgeführt wird und die Seltenerdverbindung oder das Übergangsmetalloxid in Form eines Feststoffes eingesetzt wird.

2. Verfahren nach Anspruch 1, dadurch gekennzeichnet, daß die Menge an kohlenstoffhaltiger Schwefelverbindung mindestens der stöchiometrischen Menge entspricht, um die gewünschte schwefelhaltige Seltenerdverbindung oder die schwefelhaltige Übergangsmetallverbindung zu bilden.

3. Verfahren nach Anspruch 2, dadurch gekennzeichnet, daß die oben genannte Menge der koblenstoffhaltigen Schwefelverbindung 20 bis 150 % über der stöchiometrischen Menge liegt.

4. Verfahren nach einem der Ansprüche 1 bis 3, dadurch gekennzeichnet, daß die Reaktionstemperatur zwischen 350 und 600 °C liegt.

5. Verfahren nach einem der Ansprüche 1 bis 4, dadurch gekennzeichnet, daß der anfängliche Partialdruck der kohlenstoffhaltigen Schwefelverbindung bei der Reaktionstemperatur zwischen $1 \cdot 10^5$ und $150 \cdot 10^5$ Pa, vorzugsweise zwischen $10 \cdot 10^5$ und $150 \cdot 10^5$ Pa, liegt, wenn der anfängliche Gesamtdruck des Behältnisses $10^5$ Pa beträgt.

6. Verfahren nach einem der Ansprüche 1 bis 5, dadurch gekennzeichnet, daß die Korngrößenverteilung der Seltenerdverbindungen oder der Übergangsmetalloxide zwischen 0,1 und 1.000 $\mu$m, vorzugsweise zwischen 0,1 und 200 $\mu$m, liegt.

7. Verfahren nach einem der Ansprüche 1 bis 6, dadurch gekennzeichnet, daß man nach dem Entfernen der restlichen gasförmigen Phasen die kohlenstoffhaltige Schwefelverbindung in das Behältnis hinzugibt.

8. Verfahren nach einem der Ansprüche 1 bis 7, dadurch gekennzeichnet, daß der Graphitkohlenstoff, der sich bei der Herstellung bilden kann, durch Schwefelung entfernt wird; entweder indem man am Anfang die notwendige Menge an Schwefel in Schwefelkohlenstoff löst, oder indem man den in der Endphase freigesetzten Schwefel aus der Umwandlung eines höherwertigen Sulfids in ein Sesquisulfid verwendet.

9. Verfahren nach einem der Ansprüche 1 bis 8, dadurch gekennzeichnet, daß die Seltenerdverbindung eine sauerstoffhaltige Seltenerdverbindung oder ein anorganisches Seltenerdsalz ist.

10. Verfahren nach Anspruch 9, dadurch gekennzeichnet, daß die sauerstoffhaltige Seltenerdverbindung aus der Gruppe der Oxide, Carbonate und Hydroxide ausgewählt ist.

11. Verfahren nach Anspruch 9, dadurch gekennzeichnet, daß das anorganische Seltenerdsalz aus der Gruppe der Sulfate und Nitrate ausgewählt ist.

12. Verfahren nach einem der Ansprüche 1 bis 11, dadurch gekennzeichnet, daß die kohlenstoffhaltige Schwefelverbindung aus der Gruppe von Kohlenstoffdisulfid, -monosulfid und -oxysulfid ausgewählt ist.

13. Verfahren nach Anspruch 12, dadurch gekennzeichnet, daß die kohlenstoffhaltige Schwefelverbindung ein Hydrogensulfid und/oder elementaren Schwefel enthält.